# EUROPÄISCHE PATENTANMELDUNG

(11) **EP 0 841 218 A1**
(43) Veröffentlichungstag der Anmeldung: **13.05.1998**
(21) Anmeldenummer: 97119478.2
(22) Anmeldetag: 07.11.1997
(51) Int. Cl.: B60R 13/10, B60R 9/06, B60Q 1/56

(54) **Rückseitiger Nummernschildträger für PKW's**

(30) Priorität: 11.11.1996 DE 29619532 U
(71) Anmelder: Sperr, Dieter, 61130 Nidderau (DE)
(72) Erfinder: Sperr, Dieter, 61130 Nidderau (DE)
(74) Vertreter: Wolf, Günter, Dipl.-Ing.

(57) **Zusammenfassung**

Die Erfindung betrifft einen rückseitigen Nummernschildträger für PKW's mit an der Rückseite des Fahrzeuges angeordnetem Träger für Fahrräder o. dgl. mitzuführende Lasten. Dieser besteht aus einem dem Format des Nummernschildes (1) angepaßtem flachen Gehäuse (2). Erfindungsgemäß ist im Gehäuse (2) eine Mehrfachsteckdose (3) mit durch eine rückwandseitige Öffnung (4) des Gehäuses (2) abgehenden Kabel (5) angeordnet. Außerdem ist in einem der Randbereiche des Gehäuses (2) fluchtend zur Mehrfachsteckdose (3) eine Mehrfachsteckereinschuböffnung vorgesehen.

## Beschreibung

Die Erfindung betrifft einen rückseitigen Nummernschildträger für PKW's mit an der Rückseite des Fahrzeuges angeordnetem Träger für Fahrräder o. dgl. mitzuführende Lasten, bestehend aus einem dem Format des Nummernschildes angepaßten flachen Gehäuse.

Nummernschildträger dieser Art für die amtlichen Kennzeichen von Fahrzeugen sind allgemein bekannt und in Benutzung, und zwar in verschiedenen Ausführungsformen bspw. dahingehend, daß das Nummernschild eingeschoben oder bei aufklappbarem Gehäuse eingelegt werden kann. Bekannt und zulässig ist auch die Anbringung von Trägern für Fahrräder o. dgl. Lasten an der Rückseite des Fahrzeuges, wodurch allerdings die rückwärtigen Beleuchtungseinrichtungen mehr oder weniger abgedeckt werden und die unbehinderte Sicht des Nachfolgers darauf zumindest beeinträchtigt wird.

Soweit territorial per Verordnung vorgeschrieben, müssen deshalb rückwärtig angeordnete Lastenträger mit entsprechendem Aufwand so gestaltet werden, daß die rückwärtigen Beleuchtungseinrichtungen des betreffenden Fahrzeuges weder durch den Träger selbst noch insbesondere die darauf angeordnete Last auch nicht teilweise der Sicht entzogen werden. Dies führt dazu, daß die Last entsprechend "hochgebockt" auf dem Träger angeordnet werden muß, was zur Beschwernis bei der Lastaufbringung führt und während der Fahrt in der Regel starke Geräuschbildung zur Folge hat, da insbesondere Fahrräder in hochgebockter Position am Träger das Dach des Fahrzeuges beträchtlich überragen. Die naheliegende Lösung dieses Problems, nämlich den Träger mit einem entsprechenden Satz von Beleuchtungseinrichtungen (Brems-, Rücklicht-, Blink- und ggf. Nebelleuchten) auszustatten und mit der entsprechenden Beleuchtungseinrichtung des Fahrzeuges zu koppeln, ist nur dann problemlos zu lösen, wenn das Fahrzeug per se mit einer Anhängerkupplung und entsprechendem elektrischen Anschluß ausgestattet ist, was aber für die wenigsten Fahrzeuge zutrifft, d.h., mangels einer geeigneten elektrischen Anschlußmöglichkeit hat sich die Anbringung eines zweiten Beleuchtungseinrichtungssatzes am unmittelbar am Fahrzeug angeordneten Trägers bislang nicht eingeführt und man ist, wie erwähnt, darauf ausgewichen, Auflasten, d.h., insbesondere Fahrräder entsprechend hoch aufzuladen.

Der Erfindung liegt demgemäß die Aufgabe zugrunde, für eine einfache, auch nach außen gefällige und praktisch keine großen Eingriffe an der Karosserie des Fahrzeuges verlangende elektrische Anschlußmöglichkeit zu sorgen.

Diese Aufgabe ist mit einem Nummernschildträger der eingangs genannten Art nach der Erfindung dadurch gelöst, daß im den Nummernschildträger bildenden Gehäuse eine Mehrfachsteckdose mit durch eine rückwandseitige Öffnung des Gehäuses abgehenden Kabel angeordnet ist und in einem der Randbereiche des Gehäuses fluchtend zur Mehrfachsteckdose eine Mehrfachsteckereinschuböffnung.

Durch diese erfindungsgemäße Ausbildung eines Nummernschildträgers ist gleichermaßen einfach und gefällig ein elektrischer Anschluß für eine zweite Beleuchtungseinrichtung am Träger geschaffen, wobei es, sofern der Kabeldurchgriff für die Kennzeichenbeleuchtung des Fahrzeuges nicht unmittelbar auch für das von der Mehrfachsteckdose abgehende Sammelkabel mit ausgenutzt werden kann, nur der Anbringung eines kleinen Loches im Karosserieblech unter dem Anbringungsbereich des Nummernschildes bedarf.

Für die fixierte Einbindung der Mehrfachsteckdose in das Gehäuse des Nummernschildträgers, das praktisch immer aus Kunststoff besteht, gibt es die verschiedensten Möglichkeiten, bevorzugt vorgesehen ist jedoch, daß im Anordnungsbereich der Mehrfachsteckdose im Gehäuse Steckdosenhalteelemente angeordnet sind.

Der erfindungsgemäße Nummernschildträger, dessen vorteilhafte Weiterbildungen und eine weitere unabhängige Lösung der gestellten Aufgabe werden nachfolgend anhand der zeichnerischen Darstellung von Ausführungsbeispielen näher erläutert.

Es zeigt
- Fig. 1: teilweise im Schnitt und Ansicht den Nummernschildträger;
- Fig. 2: in Ansicht gemäß Pfeil P in Fig. 1 den Nummernschildträger;
- Fig. 3: ebenfalls in Ansicht gemäß Pfeil P eine weitere Ausführungsform des Nummernschildträgers und
- Fig. 4: den Nummernschildträger in Ansicht vom Karosserieblech her gesehen und in besonderer Ausführungsform.

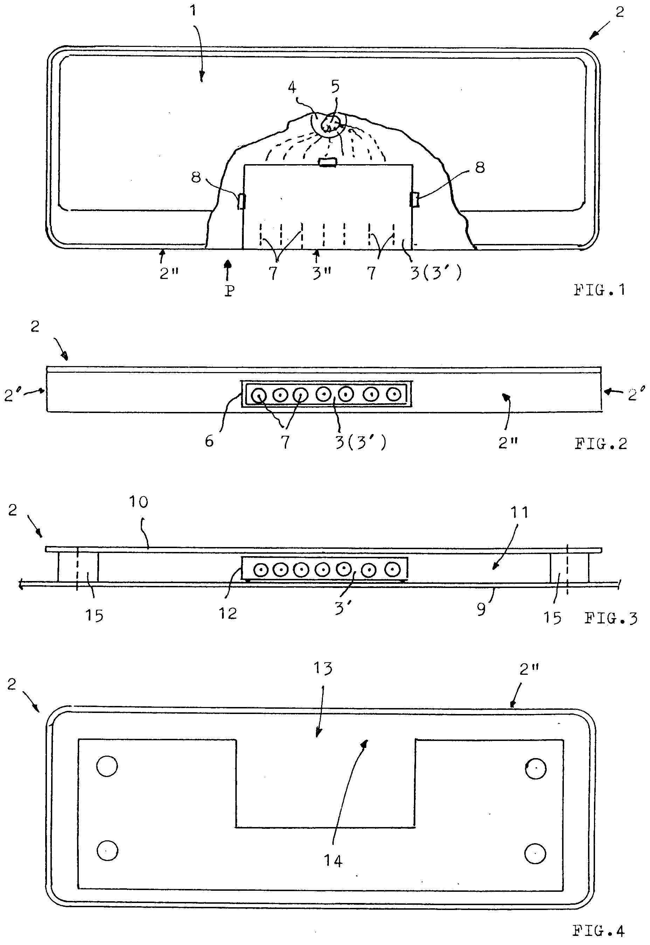

Gemäß Fig. 1 besteht der Nummernschildträger aus einem dem Format des Nummernschildes 1 angepaßten Gehäuse 2 aus Kunststoff, wobei im Gehäuse 2 eine Mehrfachsteckdose 3 mit durch eine rückwandseitige Öffnung 4 des Gehäuses 2 abgehenden Kabel 5 angeordnet ist und in einem der Randbereiche des Gehäuses 2 fluchtend zur Mehrfachsteckdose 3 eine Mehrfachsteckereinschuböffnung 6.

Um das Gehäuse in seiner Tiefe nicht dicker als üblich bemessen zu müssen, ist die Mehrfachsteckdose 3 vorteilhaft in Form einer Flachsteckdose 3' mit darin in Reihe angeordneten Kontakten 7 ausgebildet, wobei ferner die Einstecköffnung 3'' der Mehrfachsteckdose 3 in der Ebene einer Seitenrandflanke 2' des Gehäuses 2 angeordnet ist, d.h., die Flachsteckdose 3' ist direkt vom Rand des Gehäuses 2 einsteckzugänglich. Diese Anordnung könnte an sich an jeder Seitenrandflanke 2' erfolgen, bevorzugt wird aber die in Fig. 1 dargestellte Ausführungsform, bei der die Mehrfachsteckdose 3 mit ihrer Einstecköffnung 3'' gegen die untere Seitenrandflanke 2'' des Gehäuses 2 weisend angeordnet ist.

Wie ebenfalls in Fig. 1 angedeutet, sind zur einfachen Einbringung und Fixierung der Flachsteckdose 3' im Anordnungsbereich der Mehrfachsteckdose 3 im Gehäuse 2 Steckdosenhalteelemente 8 angeordnet, in die die Flachsteckdose 3' einfach eingeklipst wird. Andere Gestaltungen dieser Halteelemente, bspw. in Form von Einschubleisten mit Verrastungselementen sind aber ebenfalls möglich, zumal solche Halteelemente bei der Spritzgußherstellung des Gehäuses problemlos mit berücksichtigt bzw. hergestellt werden können, ganz abgesehen von der Möglichkeit, die Flachsteckdose einfach mit dem Gehäusekunststoff mit umspritzen zu können.

Die Ausführungsform gemäß Fig. 3 ist insofern von besonderer Art, als diese an die einfachste Form einer Nummern- bzw. Kennzeichenschildanbringung anknüpft. Das Gehäuse 2, in dem die Flachsteckdose 3' unterzubringen ist, wird hierbei nämlich aus dem Nummernschildblech 10 und dem von diesem abgedeckten Karosserieblech 9 selbst gebildet, wobei das Nummernschildblech 10 durch Distanzringe 15 vom Karosserieblech 9 auf Distanz gehalten wird und einen Zwischenraum 11 einschließt, in dem die Flachsteckdose 3' mit ihrem Öffnungsumfangsrand 12 unter dem Rand des Nummerschildbleches 10 angeordnet ist. Die Flachsteckdose 3' wird dabei einfach durch ein oder zwei Blechschräubchen vor Anbringung des Nummernschildbleches 10 am Karosserieblech 9 fixiert.

Eine weitere Ausführungsform ist in Fig. 4 dargestellt, bei der bodenseitig im Gehäuse 2 des Nummernschildträgers eine Mehrfachsteckdosenaufnahmeausnehmung 13 mit zu einer der Seitenwandflanken 2' des Gehäuses 2 gerichteter Steckereinschuböffnung 14 angeordnet ist. Hierbei wird also die Flachsteckdose 3' (in Fig. 4 nicht dargestellt) nicht in das Gehäuse 2 eingeschoben, sondern von der Bodenseite eingesetzt und ebenfalls in geeigneter Weise an benachbarten Gehäuseteilen fixiert.

Die Anzahl der Steckkontakte 7 und der Kabelstränge im aus dem Gehäuse 2 herausgeführten bzw. von der Flachsteckdose 3' abgehenden Kabel 5 entspricht natürlich den notwendig zu übertragenden Beleuchtungsfunktionen, die wiederholbar von der rückwärtigen Beleuchtungsreinrichtung am Fahrzeug auf die zusätzlich am Lastträger angeordnete Beleuchtungseinrichtung synchron zu übertragen sind.

## Patentansprüche

1. Rückseitiger Nummernschildträger für PKW's mit an der Rückseite des Fahrzeuges angeordnetem Träger für Fahrräder o. dgl. mitzuführende Lasten, bestehend aus einem dem Format des Nummernschildes (1) angepaßten flachen Gehäuse (2),
**dadurch gekennzeichnet,**
daß im Gehäuse (2) eine Mehrfachsteckdose (3) mit durch eine rückwandseitige Öffnung (4) des Gehäuses (2) abgehenden Kabel (5) angeordnet ist und in einem der Randbereiche des Gehäuses (2) fluchtend zur Mehrfachsteckdose (3) eine Mehrfachsteckereinschuböffnung (6).

2. Nummernschildträger nach Anspruch 1,
**dadurch gekennzeichnet,**
daß die Mehrfachsteckdose (3) in Form einer Flachsteckdose (3') mit darin in Reihe angeordneten Kontakten (7) ausgebildet ist.

3. Nummernschildträger nach Anspruch 1 oder 2,
**dadurch gekennzeichnet,**
daß die Einstecköffnung (3') der Mehrfachsteckdose (3) in der Ebene einer Seitenrandflanke (2') des Gehäuses (2) angeordnet ist.

4. Nummernschildträger nach einem der Ansprüche 1 bis 3,
**dadurch gekennzeichnet,**
daß die Mehrfachsteckdose (3) mit ihrer Einstecköffnung (3'') gegen die untere Seitenrandflanke (2'') des Gehäuses (2) weisend angeordnet ist.

5. Nummernschildträger nach einem der Ansprüche 1 bis 4,
**dadurch gekennzeichnet,**
daß im Anordnungsbereich der Mehrfachsteckdose (3) im Gehäuse (2) Steckdosenhalteelemente (8) angeordnet sind.

6. Nummernschildträger nach Anspruch 1 und 2,
**dadurch gekennzeichnet,**
daß das Gehäuse (2) allseitig nach außen offen ausgebildet und aus Karosserieblech (9) und dazu auf Distanz gehaltenem Nummernschildblech (10) gebildet und im Zwischenraum (11) die Flachsteckdose (3') mit ihrem Öffnungsumfangsrand (12) unter dem Rand des Nummernschildbleches (10) angeordnet ist.

7. Nummernschildträger nach einem der Ansprüche 1 bis 5,
**dadurch gekennzeichnet,**
daß im Gehäuse (2) des Nummernschildträgers eine Mehrfachsteckdosenaufnahmeausnehmung (13) mit zu einer der Seitenwandflanken (2') des Gehäuses (2) gerichteter Steckereinschuböffnung (14) angeordnet ist.
